# EUROPEAN PATENT APPLICATION

(11) **EP 2 636 887 A1**
(43) Date of publication of application: **11.09.2013**
(21) Application number: 11837724.1
(22) Date of filing: 24.10.2011
(51) Int. Cl.: F03B 13/10, F03B 13/12

(54) **HYDROELECTRIC GENERATING APPARATUS**

(30) Priority: 04.11.2010 JP 2010247383
(71) Applicant: Kawasaki Jukogyo Kabushiki Kaisha, Kobe-shi, Hyogo 650-8670 (JP)
(72) Inventor: KIYOSE, Hiromitsu, Hyogo 673-8666 (JP); KAWAMOTO, Hideki, Hyogo 673-8666 (JP); SHIMOYAMA, Noritsugu, Hyogo 673-8666 (JP); OKAWA, Hiroyasu, Hyogo 673-8666 (JP)
(74) Representative: Piésold, Alexander James
(86) International application number: PCT/JP2011/005938
(87) International publication number: WO 2012/060070

(57) **Abstract**

A water stream power generation system comprise a generator (3) driven by water streams to generate electric power, a floating body (5) floating on a water surface; a support structure (7) which is mounted to the floating body (5) such that the support structure is movable up and down and supports the generator (3), an up-down device (9) which moves up and down the support structure (7) to move the generator (3) between a position in water and a position above the floating body; and an anchor member (11) for anchoring the floating body to a fixed object.

## Description

### Technical Field

The present invention relates to a power generation system which is installed in water such as ocean water and performs power generation by utilizing natural water streams.

### Background Art

In recent years, for the purpose of protection of environments, various power generation methods utilizing natural energy have been developed. As one example, development of a power generation system utilizing water streams, which is relatively less likely to be affected by weather and is capable of supplying electric power stably, has been progressing. In particular, in recent years, a tidal current power generation system utilizing tidal currents in the ocean water has been proposed.

In the tidal current power generation system, a generator must be placed in water. As a method for implementing this, there are known, for example, a stationary method in which a generator is installed in a sea bottom (e.g., Publication of Translated PCT Application No. 2010-515851), and a floating body method in which a generator is mounted to a bottom surface of a floating body floating on a water surface (e.g., Japanese Laid-Open Patent Application Publication No. 2009-008098).

### Summary of the Invention

### Technical Problem

In a stationary energy generation system, a large-scale civil engineering work is required to install the energy generation system on a sea bottom. Because of this, initial cost is high. In addition, in inspection of the power generation system, there is a need for use of working ship equipped with a crane. Therefore, a burden on a maintenance work is large and running cost is high. In contrast, in a floating plant in the floating body method, a generator can be installed in water relatively easily. However, it is necessary to ensure stiffness of anchor devices such as anchors and chains, or a buoyant member, in view of waves and the like in bad weather, etc.. Therefore, initial cost is high. In the device of the floating body method, it is extremely difficult to raise a power generation unit from inside of water above the water and inspect the power generation unit above the water. In inspection, it is necessary to transport the entire power generation system to land. Still, a burden on a maintenance work is large and running cost is high.

An object of the present invention is to provide a water stream power generation system which is capable of easily carrying out an initial installation work and an inspection work thereafter, to solve the above described problem.

### Solution to Problem

To achieve the above described object, a water stream power generation system of the present invention comprises a generator driven by water streams to generate electric power; a floating body floating on a water surface; a support structure which is mounted to the floating body such that the support structure is movable up and down and supports the generator; an up-down device which moves up and down the support structure to move the generator between a position in water and a position above the floating body; and an anchor member for anchoring the floating body to a fixed object.

In accordance with this configuration, since the generator is installed on the floating body anchored by means of the anchor member, a work in installation is easier and installation cost is lessened. In addition, since the generator is mounted to the floating body via the support structure such that the generator can be raised up to the position above the floating body, an inspection work can be easily carried out on the floating body without raising up the generator using crane ship or transporting it to land. Therefore, a burden on a maintenance work can be reduced and running cost can be lessened. As described above, in accordance with the water stream power generation system of the present invention, the initial installation work and the inspection work thereafter can be easily carried out.

### Brief Description of the Drawings

[Fig. 1] Fig. 1 is a perspective view showing a power generation system according to an embodiment of the present invention.
[Fig. 2] Fig. 2 is a cross-sectional view taken along II-II of Fig. 1.
[Fig. 3] Fig. 3 is a plan view showing a power generation system of Fig. 1.
[Fig. 4] Fig. 4 is a front view showing a power generation system of Fig. 1.
[Fig. 5] Fig. 5 is a view showing a water feeding/discharging system of a ballast tank for use in the power generation system of Fig. 1.
[Fig. 6] Fig. 6 is a perspective view showing a state in which the power generation system of Fig. 1 is submerged in water.
[Fig. 7] Fig. 7 is a perspective view showing a state in which a generator in the power generation system of Fig. 1 is raised up.

### Description of the Embodiments

Hereinafter, an embodiment of the present invention will be described with reference to the drawings. The present invention is not limited to the embodiment.

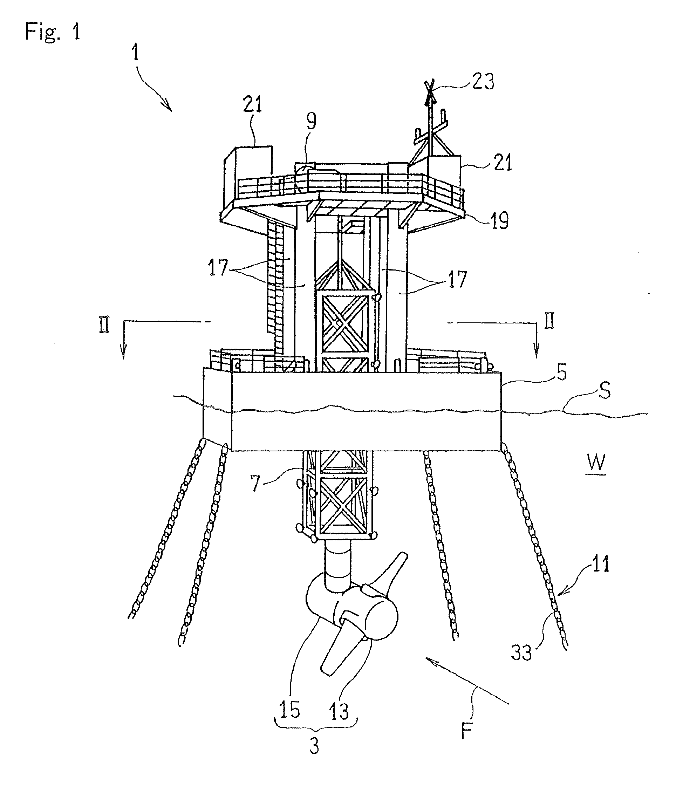

Fig. 1 is a perspective view showing a structure of a power generation system 1 according to an embodiment of the present invention. The power generation system 1 of the present embodiment is installed in water W such as ocean water and configured to generate electric power by utilizing water streams (in this example, tidal currents in the ocean water) F. The power generation system 1 includes a generator 3, a floating body 5, a support structure 7, an up-down device 9, and anchor members 11, as major components.

The generator 3 includes a water wheel 13 having a plurality of blades and actuated to be rotated by water streams, and a power generation unit 15 which generates electric power in response to the rotation of the water wheel 13. The generator 3 is mounted to the floating body 5 floating on a water surface S via the support structure 7 supporting the generator 3 and having a frame structure of a rectangular parallelepiped shape which is vertically elongated, and an up-down device 9 which moves up-down of the support structure 7. A portion of the power generation system 1, namely, the floating body 5, is anchored to a fixed object, for example, a sea bottom (not shown), by means of the anchor members 11.

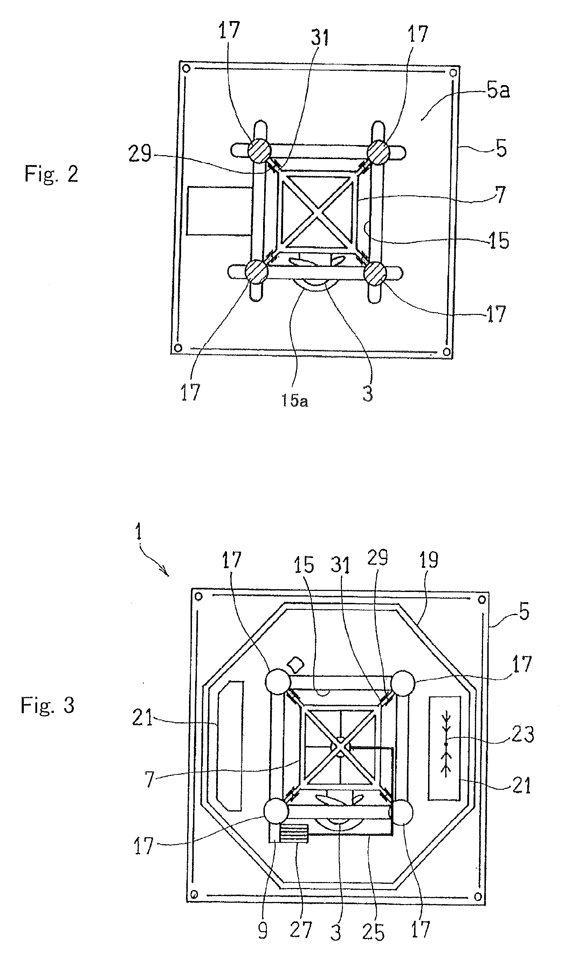

As shown in Fig. 2 which is a cross-sectional view taken along II-II of Fig. 1, the floating body 5 has a substantially square shape when viewed from above. The floating body 5 is provided in a horizontal center portion thereof, with an up-down opening 15 penetrating vertically therethrough such that the support structure 7 is inserted through the up-down opening 15 and the generator 3 mounted to a lower end portion of the support structure 7 is moved up and down. A plurality of support columns 17 protrude from a peripheral portion of the up-down opening 15 in an upper portion 5a of the floating body 5. The up-down opening 15 has a shape conforming to a planar shape of the support structure 7 and the generator 3 supported by the support structure 7. The up-down opening 15 has a shape to allow the support structure 7 and the generator 3 to pass vertically therethrough when viewed from above. That is, when viewed from above, the up-down opening 15 has a shape conforming to an outer shape of the support structure 7 and has a hollow portion 15a for allowing the generator 3 to pass therethrough, which is formed to extend outward horizontally in a portion of a periphery of an opening for allowing the support structure 1 to pass therethrough. The support columns 17 are provided in locations in the vicinity of four apexes of a substantially rectangular shape of the up-down opening 15, respectively. Alternatively, the structure of the support structure 7 is not limited to the shape of Fig. 1, but may be, for example, a cylindrical shape. In that case, the plurality of support columns 17 are provided preferably at equal intervals along an outer periphery of a circular horizontal cross-section of the support structure 17.
An upper support base 19 is mounted to upper end portions of the plurality of support columns 17. On an upper surface of the upper support base 19, a control box 21 accommodating devices used for managing and controlling the power generation system 1, the up-down device 9, an antenna 23 for communication with outside, etc., are mounted. In other words, the upper support base 19 mounted to the upper end portions of the plurality of support columns 17 support the control box 21 and the up-down device 9 such that they are spaced apart a certain distance above the floating body 5. The upper support base 19 is provided in a horizontal center portion thereof with an insertion opening 24 through which the support structure 7 is inserted and moved up and down.

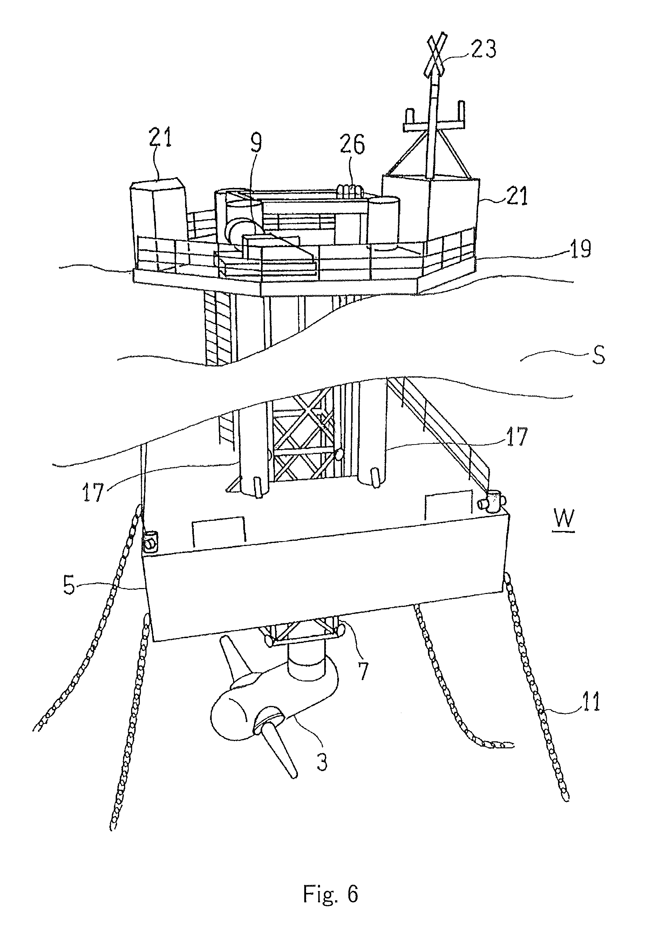

In the present embodiment, a winch is used as the up-down device 9. As shown in the plan view of Fig. 3, a wire 25 coupled to the support structure 7 is extended up to the up-down device 9 via, for example, the upper support base 19 and a pulley 26 (Fig. 6) attached to the support column 17, and wound around a drum 27 of the up-down device 9. By actuating the drum 27, the generator 3 supported by the support structure 7 is moved up and down, i.e., the generator 3 is moved between an actuation position in the water and an up-position above the floating body 5. Fig. 1 shows a state in which the generator 3 is in the actuation position in the water W.

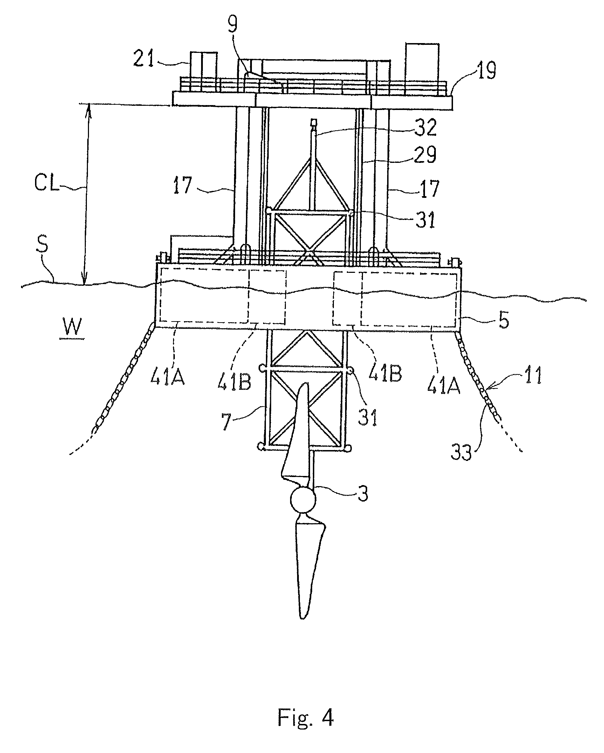

As shown in a front view of Fig. 4, a guide rail 29 is extended on an inner surface of each of support columns 17 along a lengthwise direction of the support column 17. A plurality of guide rings 31 are attached to a portion of the support structure 7 which faces the guide rails 29. By engaging the guide rings 31 of the support structure 7 with the guide rails 29, the support structure 7 is guided so as to move up and down. A mark column 32 is attached to a top portion of the support structure 7.

The anchor members 11 are not particularly limited so long as they are capable of stably anchoring the floating body 5 in the water W. In the example of Fig. 1, as the anchor member 11, the catenary anchor member 11 including a chain 33 and an anchor (not shown) attached to a tip end of the anchor 33 is used.

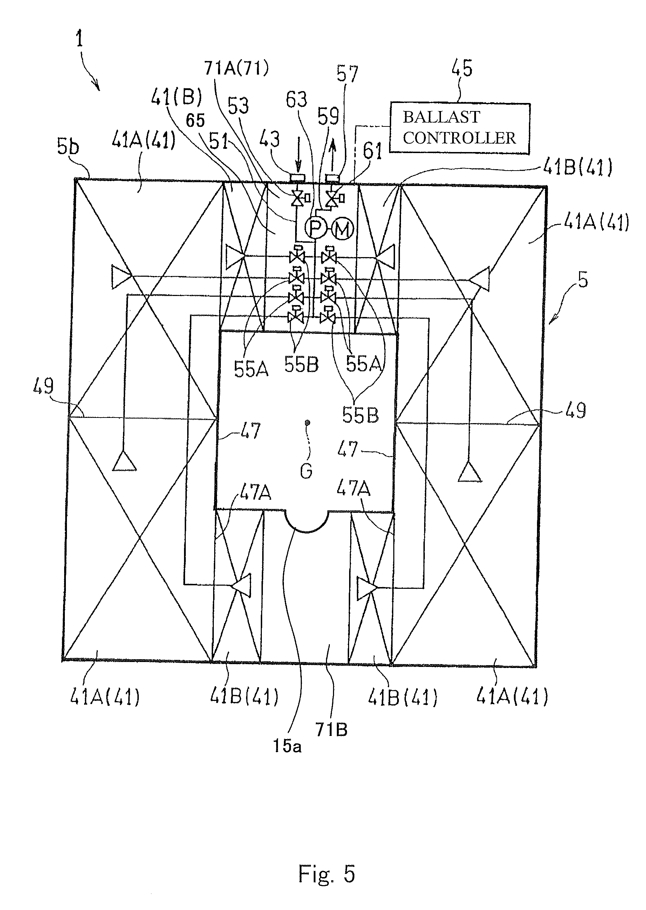

As shown in Fig. 5, a ballast tank unit 41 which can store water therein is installed inside of the floating body 5. The ballast tank unit 41 communicates with a water feeding port 43 formed on a side surface 5b of the floating body 5. On the upper support base 19 (Fig. 1), there is provided a ballast controller 45 which is configured to feed ballast water to a ballast tank to submerge the floating body 5 into the water and discharge the ballast water from the ballast tank to raise the floating body 5 above the water surface.

As will be described later in detail, the ballast controller 45 controls feeding and discharging of the ballast water to and from the ballast tank unit 41, to submerge the floating body 5 into the water W as shown in Fig. 6, and thereafter raise the floating body 5 above the water surface S again. This makes it possible to keep a balance of the power generation system 1 by submerging the floating body 5 into the water W even in a case where a wave height increases due to bad weather, etc.. Thus, it is possible to prevent damage to the power generation system 1 due to the bad weather, etc., and the power generation system 1 from being turned over.

As shown in Fig. 5, the ballast tank unit 41 is configured such that a plurality of ballast tanks are arranged in locations apart from a center-of-gravity G within a horizontal plane of the power generation system 1. The ballast controller 45 is configured to sequentially feed the ballast water to the ballast tanks such that the ballast water is firstly fed to the ballast tank which is more distant from the center-of-gravity G and then to the ballast tank which is less distant from the center-of-gravity G.

In the present embodiment, inside of the floating body 5, four first ballast tanks 41A and four second ballast tanks 41B are provided as the ballast tanks 41. The four first ballast tanks 41A are arranged such that in the horizontal cross-section of the floating body 5, outside portions of a set of opposing sides 47 of four sides defining the up-down opening 15 within which the center-of-gravity G is located, and extended lines 47A of the opposing sides 47, are respectively divided in two in the direction along the sides 47, i.e., by dividing lines 49 perpendicular to the sides 47.

By comparison, the four second ballast tanks 41B are arranged inward of the first ballast tanks 41A, i.e., inward of the extended lines 47A of the set of opposing sides 47 in the horizontal cross-section of the floating body 5. When a comparison is made for average distances from the center-of-gravity G to the inner spaces of the tanks 41 (average value of distances from the center-of-gravity G to locations in the inner spaces of the tanks 41), the average distance between the center-of-gravity G and the first ballast tank 41 A is set greater than the average distance between the center-of-gravity G and the second ballast tank 41B.

The feeding port 43 communicates with the ballast tanks 41A and 41B via a water feeding passage 51. The water feeding passage 51 is provided with a water feeding valve 53 located in the vicinity of the water feeding port 43, a plurality of first intermediate valves 55A located between the water feeding valve 53 and the first ballast tanks 41A to feed and discharge the ballast water to and from the first ballast tanks 41A, and a plurality of second intermediate valves 55B located between the water feeding valve 53 and the second ballast tanks 41B to feed and discharge the ballast water to and from the second ballast tanks 41 B.

On a side surface 5b of the floating body 5, there is provided a water discharge port 57 through which the ballast water is discharged from the ballast tank unit 41. The water discharge port 57 communicates with the ballast tanks 41 A and 41 B via a water discharge passage 59 which branches from the water feeding passage 51. The water discharge passage 59 is provided with a water discharge valve 61 opened to discharge the water and a water discharge pump 63. By opening the water discharge valve 61 and actuating the water discharge pump 63, the ballast water is discharged from the ballast tank unit 41 to outside through the water discharge port 57. This allows the submerged floating body 5 to be raised up.

When viewed from above, the ballast tank unit 41 (second ballast tank 41B) provided at one side of the floating body 5 and the ballast tank unit 41 (second ballast tank 41 B) provided at the other side of the floating body 5 are disposed a distance apart from each other. The floating body 5 is provided with a portion 71 which is present between the ballast tank unit 41 provided at one side and the ballast tank unit 41 provided at the other side and in which no ballast tank is present. The portion 71 is divided in two portions by the up-down opening 15. The divided two portions are disposed to sandwich the up-down opening 15. In a portion 71 A located at one side, there is provided an accommodating space 65 for accommodating the water feeding valve 53, the intermediate valves 55A and 55B and the water discharge pump 63. In a portion 71B located at the other side, the hollow portion 15a is provided to allow the generator 3 to pass therethrough.

When the ballast water is fed to the ballast tanks 41 A and 41B, the ballast controller 45 initially opens only the first intermediate valves 55A to feed the ballast water to the first ballast tanks 41A which are more distant from the center-of-gravity G. Then, the ballast controller 45 opens the second intermediate valves 55B as necessary to feed the ballast water to the second ballast tanks 41B. When the ballast water is discharged from the ballast tanks 41A and 41B, the ballast controller 45 preferably discharges the ballast water from the second ballast tanks 41B which are less distant from the center-of-gravity G. Since the ballast tank unit 41 is disposed apart from the center-of-gravity G within the horizontal plane of the power generation system 1, and the ballast water is sequentially fed to the plurality of ballast tanks 41A and 41 B mounted to the floating body 5 such that the ballast water is firstly fed to the ballast tank which is more distant from the center-of-gravity G and then to the ballast tank which is less distant from the center-of-gravity G, a radius of gyration of the floating body can be increased, its motion can be lessened, and a balance of the power generation system 1 can be kept stably when the wave height increases. As a result, it becomes possible to more surely prevent the power generation system 1 from being turned over.

A command for opening the water feeding valve 53 may be input manually by an operator with reference to hydrographic condition information and weather information which are generally available, or set automatically. In the case where the operator manually opens the water feeding valve 53, the command for opening the water feeding valve 53 may be provided by remote control in a remote place such as land, or above the floating body 5.

In the case where the water feeding valve 53 is opened automatically, for example, it may be opened when a measurement value detected by a wave height meter provided in an installation water area reaches a predetermined value. Or, instead of the information provided from outside, the water feeding valve 53 may be opened when a condition including a measurement value obtained by self-sustaining measurement is satisfied.

The condition including the measurement value obtained by self-sustaining measurement may include the followings, for example. i) An average value of values of the motion (e.g., yawing or pitching) of the floating body 5 for a predetermined time reaches a predetermined value or greater and ii) the measurement value detected by the wave height meter provided in the installation water area, or an average value of relative water level values measured by a relative water level meter attached on the floating body 5 reaches a predetermined value or greater.

When the conditions i) and ii) are satisfied, the ballast controller 45 opens the water feeding valve 53 to submerge the floating body 5. This makes it possible to properly perform control for submerging the floating body 5 more accurately while avoiding submerging the floating body 5 when unnecessary. The hydrographic condition information and weather information which are generally available, typically include only wave height information and does not include wave cycles. For this reason, it might be determined that the floating body 5 must be submerged even in a case where waves which are negligible in view of a motion characteristic of the floating body 5 are generated. For example, when waves which are great in wave height but have very long or short cycles are generated, a motion of the floating body 5 does not become substantial. In this case, it is not necessary to submerge the floating body 5. Or, the floating body 5 might move due to a wind blowing to a sheet-like object hanging from an upper portion of the floating body 5. Because of this, it is desirable to determine whether or not to submerge the floating object 5 in view of the condition ii) as well as the condition i).

The water feeding valve 53 is closed at a time point when the ballast tanks 41A and 41 B have been fed with the ballast water with a required amount and the floating body 5 has been submerged to a required amount. Therefore, preferably, the water feeding valve 53 is set to be closed automatically. An amount of the floating body 5 submerged is measured by, for example, a meter such as a potentiometer attached on the floating body 5.

The ballast controller 45 submerges the floating body 5 so that the upper support base 19 of Fig. 4 is positioned in the vicinity of the water surface S by feeding the ballast water to the ballast tanks 41A and 41B. Specifically, the ballast controller 45 controls the amount of the floating body 5 submerged so that at least the bottom surface of the upper support base 19 is positioned above the water surface S. More preferably, the amount of the floating body 5 submerged is decided based on a predicted maximum wave height (maximum expected value for 50∼100 years) in the installation water area. For example, the floating body 5 is submerged until a distance (clearance in submerge) CL between the water surface S and the bottom surface of the upper support base 19 which is at the upper portion of the floating body 5 reaches 1/2 of the predicted maximum wave height. The power generation system 1 is required to be designed so that height of the support columns 17 be set to provide the clearance in submerge with respect to the predicted maximum wave height in the installation water area.

When the floating body 5 is submerged, a tension of the chains 33 of the anchor members 11 is preferably adjusted as necessary. Specifically, the floating body 5 is preferably attached with a tension meter for measuring the tension of the chains 33 of the anchor members 11 and a tension adjustment device which rewinds the chains 33 to obtain a desired tension value when the tension of the chains 33 becomes below a predetermined lower limit value due to the submerge of the floating body 5.

In the above configuration, the power generation system 1 of Fig. 1 is configured such that the generator 3 is mounted to the floating body 5 anchored by means of the anchor members 11. Therefore, work in installation is easier and installation cost is not increased.

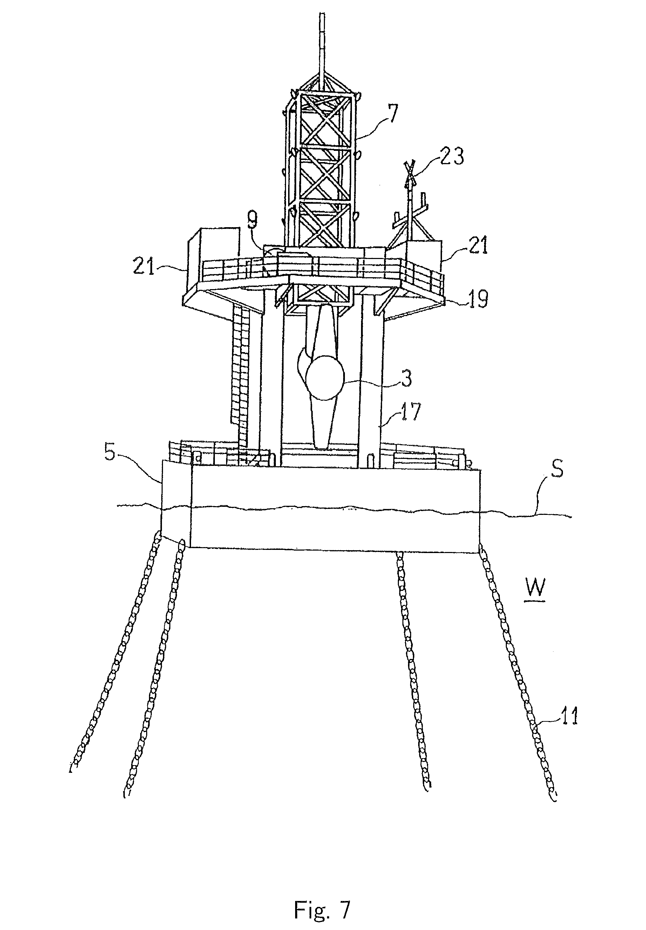

As shown in Fig. 4, during the power generation, the up-down device 9 moves down the support structure 7 to submerge the generator 3 into the water W. On the other hand, when the generator 3 is raised up for inspection or the like, the generator 3 need not be raised up by a crane ship or transported to land, and inspection can be easily carried out in a state in which the generator 5 is raised up to the up-position above the floating body 5 as shown in Fig. 7, because the generator 3 is mounted to the floating body 5 via the support structure 7 such that the generator 3 can be raised up above the floating body 5. Therefore, a burden on a maintenance work can be lessened and running cost is not increased.

The water stream power generation system according to an embodiment of the present invention comprises the ballast tank which is mounted to the floating body and stores the ballast water, and the ballast controller which feeds the ballast water to the ballast tank to submerge the floating body into the water and discharges the ballast water from the ballast tank to raise the floating body above the water surface. In accordance with this configuration, even when a wave height increases due to bad weather, etc., the floating body can be submerged into the water and damage to the power generation system can be prevented. At a time point when the weather has been restored, the power generation system can be raised up again, and thus the power generation is enabled.

In the water stream power generation system according to an embodiment of the present invention, the upper support base is mounted to the upper portion of the floating body via the support columns. In accordance with this configuration, since the devices used for managing and controlling the power generation system can be installed on the upper support base apart from the water surface, the power generation system can be managed and controlled surely, and as a result, reliability of the power generation system can be improved.

In the water stream power generation system according to an embodiment of the present invention, the ballast controller feeds the ballast water to the ballast tank to submerge the floating body such that the upper support base is positioned in the vicinity of the water surface. In accordance with this configuration, even when a wave height increases due to bad weather, etc., the floating body can be submerged while keeping a balance of the power generation system. This makes it possible to effectively prevent the power generation system from being turned over.

In the water stream power generation system according to an embodiment of the present invention, the support column is provided with the guide rail for guiding the support structure such that the support structure is moved up and down. In accordance with this configuration, the up-down movement of the generator can be carried out smoothly via the support structure.

In the water stream power generation system according to an embodiment of the present invention, the ballast tank is disposed in a location apart from a center-of-gravity of the power generation system within the horizontal plane. The ballast tank includes the plurality of ballast tanks. The controller sequentially feeds the ballast water to the ballast tanks such that the ballast water is firstly fed to the ballast tank which is more distant from the center-of-gravity, and then to the ballast tank which is less distant from the center-of-gravity. In accordance with this configuration, the radius of gyration of the floating body can be increased, and a balance of the power generation system can be kept stably even when the wave height increases. As a result, it becomes possible to more surely prevent the power generation system from being turned over.

Although in the above described embodiment, the example in which the tidal currents of the ocean water are used as the water streams has been described, the present invention is not limited to this, and is applicable to another environment in which the water streams are used.

Thus far, the suitable embodiments of the present invention have been described with reference to the drawings. The present invention can be added, changed, or deleted within a scope of a spirit of the present invention. Therefore, such addition, change and deletion are included in the present invention.

## Claims

1. A water stream power generation system comprising:
a generator driven by water streams to generate electric power;
a floating body floating on a water surface;
a support structure which is mounted to the floating body such that the support structure is movable up and down and supports the generator;
an up-down device which moves up and down the support structure to move the generator between a position in water and a position above the floating body; and
an anchor member for anchoring the floating body to a fixed object.

2. The water stream power generation system according to Claim 1, further comprising:
a ballast tank which is mounted to the floating body and stores ballast water; and
a ballast controller which feeds the ballast water to the ballast tank to submerge the floating body into the water and discharges the ballast water from the ballast tank to raise the floating body above the water surface.

3. The water stream power generation system according to Claim 2,
wherein an upper support base is mounted to an upper portion of the floating body via a support column.

4. The water stream power generation system according to Claim 3,
wherein the ballast controller feeds the ballast water to the ballast tank to submerge the floating body such that the upper support base is positioned in the vicinity of the water surface.

5. The water stream power generation system according to Claim 3 or 4,
wherein the support column is provided with a guide rail for guiding the support structure such that the support structure is movable up and down.

6. The water stream power generation system according to any one of Claims 2 to 5,
wherein the ballast tank is disposed in a location apart from a center-of-gravity of the power generation system within a horizontal plane.

7. The water stream power generation system according to Claim 6,
wherein the ballast tank includes a plurality of ballast tanks, and the ballast controller sequentially feeds the ballast water to the ballast tanks such that the ballast water is firstly fed to the ballast tank which is more distant from the center-of-gravity of the power generation system and then to the ballast tank which is less distant from the center-of-gravity of the power generation system.
